(19) Europäisches Patentamt
European Patent Office
Office européen des brevets

(11) EP 2 966 116 A1

(12) # EUROPEAN PATENT APPLICATION
published in accordance with Art. 153(4) EPC

(43) Date of publication:
**13.01.2016 Bulletin 2016/02**

(21) Application number: **14759938.5**

(22) Date of filing: **27.02.2014**

(51) Int Cl.:
***C08J 3/20*** *(2006.01)* ***C08K 3/04*** *(2006.01)*
***C08L 101/00*** *(2006.01)*

(86) International application number:
**PCT/JP2014/054814**

(87) International publication number:
**WO 2014/136642 (12.09.2014 Gazette 2014/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.03.2013 JP 2013044468**
**02.08.2013 JP 2013161323**

(71) Applicant: **Sekisui Chemical Co., Ltd.**
**Osaka 530-8565 (JP)**

(72) Inventors:
- **SAWA, Kazuhiro**
**Mishima-gun**
**Osaka 618-0021 (JP)**
- **INUI, Nobuhiko**
**Mishima-gun**
**Osaka 618-0021 (JP)**
- **TAKAHASHI, Katsunori**
**Mishima-gun**
**Osaka 618-0021 (JP)**

(74) Representative: **Ter Meer Steinmeister & Partner Patentanwälte mbB**
**Nymphenburger Straße 4**
**80335 München (DE)**

(54) **RESIN-COMPOSITE-MATERIAL PRODUCTION METHOD, AND RESIN COMPOSITE MATERIAL**

(57) There is provided a method for producing a resin composite material in which a synthetic resin is grafted on a carbon material and the deterioration of the resin is less likely to occur to develop high mechanical strength. A method for producing a resin composite material, comprising steps of providing a resin composition comprising a synthetic resin and a carbon material dispersed in the synthetic resin and having a graphene structure; and grafting the synthetic resin on the carbon material simultaneously with the step of providing the resin composition, or after the step of providing the resin composition, wherein the grafting step is performed by mixing an initiator in which a radical generated in thermal decomposition is a carbon radical with the synthetic resin and the carbon material and heating an obtained mixture.

EP 2 966 116 A1

## Description

### Technical Field

The present invention relates to a resin composite material in which a carbon material having a graphene structure is dispersed in a synthetic resin, and a method for producing the same.

### Background Art

In recent years, various attempts of adding a carbon material having a graphene structure to a synthetic resin have been made, because mechanical strength can be effectively increased and because excellent electrical conductivity can be obtained.

For example, the following Patent Literature 1 discloses a method for producing a resin composite material, comprising the steps of providing a resin composition comprising a synthetic resin and a carbon material having a graphene structure dispersed in the synthetic resin; and grafting the synthetic resin on the carbon material simultaneously with or subsequently to the step of providing the resin composition. In this production method, the grafting is performed by irradiating the resin composition with electron beams or microwaves.

In Patent Literature 1, it is disclosed that it is desired to add a reaction aid in order to promote the generation of free radicals by irradiation with electron beams. In Patent Literature 1, examples of such a reaction aid include divinylbenzene and trimethylolpropane trimethacrylate.

On the other hand, the following Patent Literature 2 discloses a resin composite material obtained by grafting a synthetic resin on a carbon material having a graphene structure as in Patent Literature 1. Patent Literature 2 discloses a means of adding a radical initiator for making the formation of radicals easy in grafting. It is shown that examples of this radical initiator include azo compounds.

### Citation List

### Patent Literature

Patent Literature 1: Japanese Patent No. 5007371
Patent Literature 2: Japanese Patent Laid-Open No. 2012-136712

### Summary of Invention

### Technical Problem

However, in the production methods described in Patent Literature 1 and Patent Literature 2, the synthetic resin constituting the matrix in the obtained resin composite material tends to deteriorate. Therefore, sufficient mechanical strength is difficult to obtain.

It is an object of the present invention to provide a method for producing a resin composite material in which a synthetic resin is grafted on a carbon material and the deterioration of the resin is less likely to occur to develop high mechanical strength, and a resin composite material obtained by the method for producing a resin Composite material.

### Solution to Problem

A resin composite material according to the present invention is a resin composite material comprising a synthetic resin and a carbon material having a graphene structure having part of the above synthetic resin grafted thereon and being dispersed in the above synthetic resin, wherein a part of the above synthetic resin that is not grafted on the above carbon material having a graphene structure has an MFR of 15 g/10 min or less as measured according to JIS K7210.

The resin composite material according to the present invention preferably comprises 5 parts by weight or more of the above carbon material having a graphene structure based on 100 parts by weight of the above synthetic resin.

The resin composite material according to the present invention preferably further comprises a different type of resin from the above synthetic resin.

In the resin composite material according to the present invention, preferably, the above carbon material having a graphene structure is at least one selected from the group consisting of graphite, exfoliated graphite, and graphene.

In the resin composite material according to the present invention, preferably, the above synthetic resin is a thermoplastic resin. More preferably, the above thermoplastic resin is a radical-degradable resin.

A method for producing a resin composite material according to the present invention comprises steps of providing a resin composition comprising a synthetic resin and a carbon material having a graphene structure dispersed in the above synthetic resin; and grafting the above synthetic resin on the above carbon material simultaneously with the step of providing the resin composition, or after the above step. In the production method of the present invention, the grafting step is performed by mixing an initiator in which a radical generated in thermal decomposition is a carbon radical with the above synthetic resin and the above carbon material and heating an obtained mixture.

In another broad aspect, the method for producing a resin composite material according to the present invention comprises steps of providing a resin composition comprising a synthetic resin and a carbon material dispersed in the above synthetic resin and having a graphene structure; and grafting the above synthetic resin on the above carbon material simultaneously with the step of providing the above resin composition, or after the step of providing the above resin composition, wherein the above grafting step is performed by mixing a radical initiator with the above synthetic resin and the above carbon material and heating an obtained mixture, and a dispersion area ratio of the carbon material when the above radical initiator is mixed is equal to or less than [Armax] represented by the following formula. Preferably, a radical generated when the above radical initiator thermally decomposes is a carbon radical.

$$[Armax] = (5[Gr])/8$$

wherein [Gr] is a ratio of the above carbon material based on 100 parts by weight of the above synthetic resin.

In another broad aspect, the method for producing a resin composite material according to the present invention comprises steps of providing a resin composition comprising a synthetic resin and a carbon material dispersed in the above synthetic resin and having a graphene structure; and grafting the above synthetic resin on the above carbon material simultaneously with the step of providing the above resin composition, or after the step of providing the above resin composition, wherein the above grafting step is performed by mixing a radical initiator and a compound having radical trapping properties with the above synthetic resin and the above carbon material and heating an obtained mixture. Preferably, the above compound having radical trapping properties is at least one selected from the group consisting of compounds having any one of structures of the following formulas (1) to (5) :

[Formula 1]

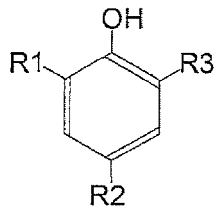

··· Formula (1)

[Formula 2]

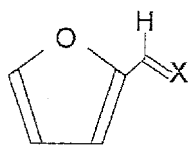

··· Formula (2)

[Formula 3]

(RO)2PH(=O) Formula (3)

[Formula 4]

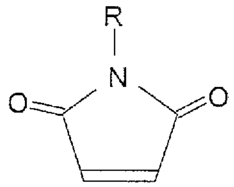 ··· Formula (4)

[Formula 5]

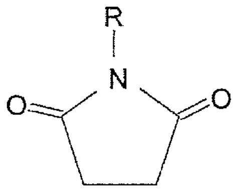 ··· Formula (5)

In the method for producing a resin composite material according to the present invention, preferably, the above synthetic resin is grafted on the above carbon material so that Mw2/Mw1 that is a ratio between a weight-average molecular weight of the above synthetic resin, Mw1, and a weight-average molecular weight of the synthetic resin not grafted on the above carbon material in an obtained resin composite material, Mw2, is 0.5 or more.

The method for producing a resin composite material according to the present invention may further comprises a step of mixing the same type of synthetic resin as the above synthetic resin or a different resin after the above grafting step.

In the method for producing a resin composite material according to the present invention, as the above carbon material having a graphene structure, preferably, at least one carbon material selected from the group consisting of graphite, exfoliated graphite, and graphene is used.

In the method for producing a resin composite material according to the present invention, preferably a thermoplastic resin is used as the above synthetic resin, and more preferably a crystalline resin is used as the thermoplastic resin.

Advantageous Effect of Invention

According to the method for producing a resin composite material according to the present invention, it is possible to provide a resin composite material in which the deterioration of a synthetic resin as a matrix is less likely to occur to develop high mechanical strength and the like.

Description of Embodiments

The details of the present invention will be described below.

(Resin Composite Material)

A resin composite material according to the present invention comprises a synthetic resin and a carbon material having a graphene structure dispersed in the above synthetic resin. Part of the above synthetic resin is grafted on the surface of the above carbon material having a graphene structure. Therefore, in the resin composite material of the present invention, the adhesiveness between the above synthetic resin and the above carbon material is much more increased. Further, the affinity of the above grafted carbon material for the above synthetic resin is increased. Therefore, in the above resin composite material comprising the above synthetic resin, the above grafted carbon material is uniformly dispersed in the above synthetic resin. Therefore, the mechanical strength of the above resin composite material can be effectively increased, and the coefficient of linear expansion can be effectively decreased.

In the resin composite material according to the present invention, a part of the above synthetic resin that is not grafted on the above carbon material having a graphene structure has an MFR of 15 g/10 min or less as measured according to JIS K7210. Therefore, in the resin composite material according to the present invention, the ratio of a low molecular weight synthetic resin is low, and therefore, mechanical properties such as elastic modulus and breaking strain are increased. The above MFR is preferably 10 g/10 min or less, more preferably 5 g/10 min or less. The MFR can be measured by a method described in the section Evaluation of Examples and Comparative Examples described

later.

(Synthetic Resin)

The above synthetic resin contained in the resin composite material of the present invention is not particularly limited, and various known synthetic resins can be used. Preferably, a thermoplastic resin is used as the above synthetic resin. With a resin composite material using a thermoplastic resin, various molded articles can be easily obtained under heating using various molding methods.

Examples of the above thermoplastic resin can include polyolefins typified by polyethylenes such as high density polyethylene, low density polyethylene, and linear low density polyethylene, and polypropylenes such as homopolypropylene, block polypropylene, and random polypropylene, cyclic polyolefins such as norbornene resins, vinyl acetate copolymers such as polyvinyl acetate and ethylene vinyl acetate, polyvinyl acetate derivatives such as polyvinyl alcohol and polyvinyl butyral, polyesters such as PET, polycarbonates, and polylactic acid, polyether resins such as polyethylene oxide, polyphenylene ether, and polyetheretherketone, acrylic resins such as PMMA, sulfone-based resins such as polysulfones and polyethersulfones, fluorinated resins such as PTFE and PVDF, polyamide resins such as nylons, halogenated resins such as polyvinyl chloride and vinylidene chloride, polystyrene, polyacrylonitrile, and copolymerized resins thereof. For the above synthetic resin, only one may be used, or two or more may be used in combination. Particularly preferably, polyolefins, which are inexpensive and easily molded under heating, are desired.

Further, as the above thermoplastic resin, a crystalline resin may be used, or an amorphous resin may be used. When a crystalline resin is used, the mechanical strength can be much more increased. Examples of the crystalline resin include crystalline polypropylene, crystalline polyethylene, crystalline norbornene, crystalline polyvinyl acetate, crystalline polylactic acid, and semicrystalline PVDF. More preferably, inexpensive crystalline polypropylene is used.

When an amorphous resin is used as the above thermoplastic resin, the fluidity of the above amorphous resin can be effectively suppressed by dispersing the above carbon material in the above amorphous resin. The above amorphous resin is not particularly limited, and an appropriate amorphous resin can be used. Examples of the above amorphous resin include atactic polypropylene, amorphous norbornene, amorphous PET, amorphous polycarbonates, polyphenylene ether, polyetheretherketone, atactic PMMA, polysulfones, polyethersulfones, and atactic polystyrene. More preferably, inexpensive atactic polypropylene can be used.

Further, as the above thermoplastic resin, a radical-degradable resin can be used. The radical-degradable resin herein refers to a resin in which a main chain cutting reaction proceeds mainly by forming a radical. Specific examples of the radical-degradable resin include polypropylene, polyisobutylene, polyvinylene chloride, polytetrafluoroethylene, polymethyl methacrylate, polyvinyl butyral, polyacrylamide, and epoxy resins.

In the present invention, a different type of resin from the above synthetic resin may be further contained.

The above different type of resin may or may not be grafted on the carbon material.

For the above different type of resin, various thermoplastic resins and thermosetting resins can be used. Examples of the thermoplastic resins include the previously described various thermoplastic resins that can be used as the above synthetic resin. Examples of the thermosetting resins include epoxy resins and polyurethane resins. The above different type of resin may be a crystalline resin, or an amorphous resin as previously described. However, generally, a crystalline resin has better mechanical properties such as elastic modulus and molding processability than an amorphous resin, and therefore, the above different type of resin is preferably a crystalline resin.

The blending ratio between the above synthetic resin and the above different type of resin is not particularly limited, and the amount of the above different type of resin blended is preferably 1000 parts by weight or less based on 100 parts by weight of the above synthetic resin. When the amount of the above different type of resin blended is more than 1000 parts by weight, the effect of improving mechanical strength and decreasing the coefficient of linear expansion by the above carbon material contained in the resin composite material sometimes cannot be sufficiently exerted.

(Carbon Material Having Graphene Structure)

In the resin composite material of the present invention, the above carbon material having a graphene structure is dispersed in the above synthetic resin. Thus, the mechanical strength of the resin composite material of the present invention can be increased, and the coefficient of linear expansion can be decreased. Further, in some cases, the resin composite material of the present invention can also develop electrical conductivity. Therefore, the resin composite material of the present invention has a possibility that it can also be used as a material that develops electrical conductivity.

In addition, the above synthetic resin is grafted on the above carbon material. Therefore, in the resin composite material of the present invention, the adhesiveness between the above synthetic resin and the above carbon material is much more increased. Further, the affinity of the above carbon material on which the above synthetic resin is grafted for the above synthetic resin is increased. Therefore, in the resin composite material of the present invention, the above grafted carbon material is uniformly dispersed in the above synthetic resin. Therefore, the mechanical strength can be

effectively increased, and the coefficient of linear expansion can be effectively decreased.

The above carbon material having a graphene structure is not particularly limited, and preferably, at least one selected from the group consisting of graphite, carbon nanotubes, exfoliated graphite, and graphene can be used. More preferably, as the above carbon material, a stack of a plurality of graphene sheets, that is, exfoliated graphite, is used. In the present invention, the exfoliated graphite is obtained by subjecting the original graphite to exfoliation treatment, and refers to a graphene sheet stack thinner than the original graphite. The number of stacked graphene sheets in the exfoliated graphite should be smaller than that in the original graphite and is usually about several to 200.

The above exfoliated graphite has a shape having a relatively large specific surface area. Therefore, in the resin composite material of the present invention, since the above exfoliated graphite is dispersed, mechanical strength against an external force applied in a direction crossing the stacked surfaces of the graphene sheets of the above exfoliated graphite can be effectively increased. In the present invention, the specific surface area refers to BET specific surface area measured by a BET three-point method.

The preferred lower limit of the BET specific surface area of the above exfoliated graphite is 15 $m^2/g$, and the preferred upper limit is 2700 $m^2/g$. When the specific surface area of the above exfoliated graphite is lower than 15 $m^2/g$, the mechanical strength against an external force applied in a direction crossing the above stacked surfaces may not be sufficiently increased. On the other hand, the theoretical BET specific surface area of a single-layer graphene sheet is 2700 $m^2/g$, which is a limit value.

The blending ratio between the above carbon material and the above synthetic resin is not particularly limited, and the amount of the above carbon material blended is preferably 5 parts by weight or more based on 100 parts by weight of the above synthetic resin. More preferably, the amount of the above carbon material blended is preferably in the range of 10 to 50 parts by weight based on 100 parts by weight of the above synthetic resin. When the amount of the above carbon material blended is too small, the mechanical strength may not be sufficiently increased, and the coefficient of linear expansion may not be sufficiently decreased. When the amount of the above carbon material blended is too large, the rigidity of the resin composite material is increased, but the resin composite material becomes brittle and may crack easily.

In the resin composite material of the present invention, the grafting ratio of the above carbon material is in the range of 5% by weight to 3300% by weight. In the present invention, the grafting ratio of the carbon material refers to the ratio between the weight of the above carbon material contained in the resin composite material and the weight of the synthetic resin forming chemical bonds directly to the above carbon material by grafting in the resin composite material. By setting the grafting ratio of the above carbon material in the above range, the mechanical strength of the resin composite material of the present invention can be effectively increased, and the coefficient of linear expansion can be effectively decreased.

When the grafting ratio of the above carbon material is lower than 5% by weight, the adhesiveness between the above synthetic resin and the above carbon material may not be sufficiently increased. Therefore, the mechanical strength of the resin composite material sometimes cannot be sufficiently increased, and the coefficient of linear expansion sometimes cannot be sufficiently decreased. When the grafting ratio of the above carbon material is higher than 3300% by weight, the effect is saturated, and the mechanical strength may not be further increased, and the coefficient of linear expansion may not be further decreased. Preferably, the grafting ratio of the above carbon material is in the range of 10% by weight to 2000% by weight, further preferably in the range of 30% by weight to 1000% by weight.

The grafting ratio of the carbon material contained in the resin composite material can be measured by the following method. For example, the ungrafted synthetic resin contained in the resin composite material is dissolved and removed with a solvent to isolate the grafted carbon material. Then, the above grafted carbon material is subjected to thermogravimetric measurement (TGA measurement) under an air atmosphere in the temperature range of 30 to 600°C at a temperature increase rate of 10°C/min. At this time, the grafting ratio of the above carbon material can be obtained by the following formula with the amount of the decomposition product decomposed before temperature increase to 500°C being A% by weight, and the amount of the undecomposed residue not decomposed even by temperature increase to 500°C being B% by weight.

$$\text{grafting ratio (\% by weight)} = (A/B) \times 100$$

The above solvent is not particularly limited as long as it dissolves the above ungrafted synthetic resin and hardly dissolves the above grafted carbon material, and an appropriate solvent can be used. For example, when the above synthetic resin is an olefin-based resin, hot xylene at 130°C or the like can be used. When the above synthetic resin is an acrylic resin such as PMMA, acetone, dichlorobenzene, or the like can be used. When the above synthetic resin is a polyamide-based resin such as a nylon, hot benzyl alcohol at 200°C, hot nitrobenzene at 200°C, or the like can be used. When the above synthetic resin is a polystyrene-based resin, THF, dichlorobenzene, or the like can be

used. When the above synthetic resin is a polycarbonate-based resin, THF, dichloromethane, or the like can be used.

(Method for Producing Resin Composite Material)

In a method for producing a resin composite material according to the present invention, the above resin composite material according to the present invention can be produced. In the method for producing a resin composite material according to the present invention, first, a resin composition comprising a synthetic resin and a carbon material having a graphene structure dispersed in the synthetic resin is provided.

In the production method of the present invention, the synthetic resin is grafted on the carbon material simultaneously with the step of providing a resin composition comprising a synthetic resin and a carbon material having a graphene structure described above, or after the step of providing the above resin composition. The step of providing the above resin composition is performed by weighing and blending the above synthetic resin and the carbon material by an appropriate method.

The above grafting step can be performed by mixing a radical initiator with the above synthetic resin and the above carbon material and heating the obtained mixture. Therefore, the above heating can be performed by heating to a temperature at which the above initiator thermally decomposes or higher. Therefore, the heating temperature may be selected according to the thermal decomposition temperature of the initiator used.

The above radical initiator is not particularly limited, and various known radical initiators can be used. In the present invention, a radical initiator in which a radical generated during thermal decomposition is a carbon radical may be used. Such an initiator include azobisisobutyronitrile (AIBN), azobis(2-methylpropionitrile), and 4,4'-azobis(4-cyanovaleric acid).

The initiator in which a radical generated during thermal decomposition is a carbon radical does not have very strong reactivity with hydrogen and has mild reactivity with hydrogen. Therefore, in grafting, the cutting of the molecular chain of the synthetic resin as a matrix is less likely to occur. Thus, the deterioration of the synthetic resin can be suppressed. Moreover, although the reactivity is mild, the synthetic resin can be reliably grafted on the carbon material, and thus, high mechanical strength and the like can be developed.

For the above radical initiator, only one may be used, or two or more may be used in combination.

The blending ratio of the above initiator is not particularly limited and is preferably 0.1 parts by weight or more based on 100 parts by weight of the synthetic resin. When the blending ratio of the initiator is less than 0.1 parts by weight, carbon radicals are less likely to be sufficiently generated, and a sufficient grafting reaction sometimes cannot be caused. More preferably, the blending ratio of the initiator is 0.5 parts by weight or more based on 100 parts by weight of the above synthetic resin.

The blending ratio of the above initiator is desirably 20 parts by weight or less based on 100 parts by weight of the above synthetic resin. When the blending ratio of the initiator is more than 20 parts by weight, the molecular chain of the synthetic resin may be excessively cut. Therefore, the mechanical strength of the obtained resin composite material may decrease. More preferably, the blending ratio of the initiator is 10 parts by weight or less based on 100 parts by weight of the synthetic resin.

In the method for producing a resin composite material according to the present invention, the above grafting step may be performed by mixing a radical initiator and a compound having radical trapping properties with the above synthetic resin and the above carbon material and heating the obtained mixture. Preferably, the above compound having radical trapping properties is at least one selected from the group consisting of compounds having any one of structures of the following formulas (1) to (5). Also in this case, as the radical initiator, various known radical initiators can be used.

[Formula 6]

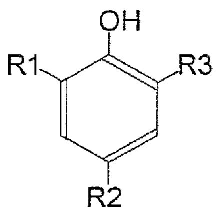

··· Formula (1)

[Formula 7]

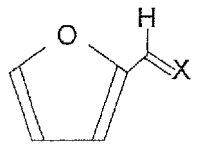

··· Formula (2)

[Formula 8]

(RO)2PH(=O) Formula (3)

[Formula 9]

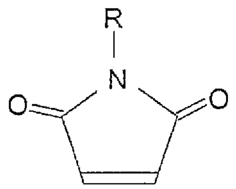

··· Formula (4)

[Formula 10]

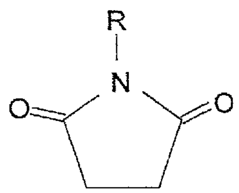

··· Formula (5)

When the compound having radical trapping properties is mixed, a radical can be supplemented and stabilized. Therefore, in grafting, the cutting of the molecular chain of the synthetic resin as a matrix is less likely to occur. Thus, the deterioration of the synthetic resin can be suppressed. Moreover, the synthetic resin can be reliably grafted on the carbon material, and thus, high mechanical strength and the like can be developed.

Preferably, such grafting is desired that the ratio Mw2/Mw1 is 0.5 or more when the weight-average molecular weight of the synthetic resin used in the above method for producing a resin composite material is Mw1, and the weight-average molecular weight of the ungrafted synthetic resin in the resin composite material obtained by grafting is Mw2. When the above ratio Mw2/Mw1 is 0.5 or more, the shortening of the molecular chain of the synthetic resin in the resin composite material does not proceed much even if the grafting step is carried out, and therefore, a decrease in mechanical strength can be suppressed much more effectively. More preferably, the above ratio Mw2/Mw1 is desirably 0.7 or more.

(Additional Resin)

In the present invention, the step of mixing the same type of synthetic resin as the above synthetic resin or a different resin may be further included after the above grafting step.

The resin added after the grafting step as described above may or may not be grafted on the carbon material.

The above additional resin may be the same resin as the above synthetic resin. The above additional resin may be a different resin from the above synthetic resin, and various thermoplastic resins and thermosetting resins can be used. Examples of the thermoplastic resins include the previously described various thermoplastic resins that can be used as the above synthetic resin. Examples of the thermosetting resins include epoxy resins and polyurethane resins. The above additional resin may be a crystalline resin, or an amorphous resin as previously described. However, generally, a crystalline resin has better mechanical properties such as elastic modulus and molding processability than an amorphous resin, and therefore, the above additional resin is preferably a crystalline resin.

The blending ratio between the above synthetic resin and the above additional resin is not particularly limited, and the amount of the above additional resin blended is preferably 1000 parts by weight or less based on 100 parts by weight of the above synthetic resin. When the amount of the above additional resin blended is more than 1000 parts by weight, the effect of improving mechanical strength and decreasing the coefficient of linear expansion by the above carbon material contained in the resin composite material sometimes cannot be sufficiently exerted.

(Other Components)

The resin composite material of the present invention may comprise various additives in a range that does not inhibit the object of the present invention. Examples of such additives can include antioxidants such as phenolic, phosphorus-based, amine-based, or sulfur-based antioxidants; metal harm inhibitors; halogenated flame retardants such as hexabromobiphenyl ether or decabromodiphenyl ether; flame retardants such as ammonium polyphosphate or trimethyl phosphate; various fillers; antistatic agents; stabilizers; and pigments.

The resin composite material of the present invention may comprise an appropriate reaction aid generally used to promote a radical reaction. Such a reaction aid may be used to promote the grafting reaction of the above synthetic resin on the above carbon material when the resin composite material of the present invention is produced. Examples of the above reaction aid can include divinylbenzene, trimethylolpropane trimethacrylate, 1,9-nonanediol dimethacrylate, 1,10-decanediol dimethacrylate, triallyl trimellitate ester, triallyl isocyanurate, ethylvinylbenzene, neopentyl glycol dimethacrylate, 1,6-hexanediol dimethacrylate, lauryl methacrylate, stearyl methacrylate, diallyl phthalate, diallyl terephthalate, and diallyl isophthalate.

(Details of Production Method)

In the production method of the present invention, a resin composition comprising a synthetic resin and the above carbon material having a graphene structure is provided. Examples of the method for providing the above resin composition include a method comprising mixing the synthetic resin and the carbon material having a graphene structure to disperse the above carbon material in the above synthetic resin. The above mixing method is not particularly limited. Examples of the above mixing method include a method comprising melting and kneading the above synthetic resin and the above carbon material, and a method comprising dissolving or dispersing the above synthetic resin and the above carbon material in a solvent.

When the above mixing method is the method comprising melting and kneading the above synthetic resin and the above carbon material, the above melting and kneading can be performed using an appropriate kneading apparatus, for example, Plastomill, a single-screw extruder, a twin-screw extruder, a Banbury mixer, or a roll.

When the above mixing method is the method comprising dissolving or dispersing the above synthetic resin and the above carbon material in a solvent, the above solvent is not particularly limited as long as the above synthetic resin and the above carbon material can be dissolved or dispersed. Examples of the above solvent include dichlorobenzene, N-methyl-2-pyrrolidone, DMF, and higher alcohols.

The above resin composition may further comprise the previously described appropriate reaction aid generally used to promote a radical reaction, as required. The addition of the reaction aid can efficiently cause a grafting reaction in the step of grafting the above synthetic resin on the above carbon material described later. In addition, a problem accompanying the grafting reaction, that is, resin deterioration due to excessive cutting of the molecular chain, and the like, can also be suppressed.

As the above reaction aid, preferably, a polyfunctional compound can be used. For the above reaction aid, only one may be used, or two or more reaction aids may be used in combination.

When the amount of the above reaction aid added is small, the above free radicals are not sufficiently generated, and chemical bonds between the above synthetic resin and the above carbon material may not be sufficiently formed. Therefore, 0.1 parts by weight or more of the above reaction aid is preferably blended based on 100 parts by weight of the above synthetic resin, and the above reaction aid is more preferably 0.2 parts by weight or more.

When the amount of the above reaction aid added is too large, a large amount of a polymer of the above reaction aid may form. Therefore, the appearance properties of the obtained resin composite material may decrease. Therefore, 10 parts by weight or less of the above reaction aid is preferably blended based on 100 parts by weight of the above synthetic resin, and the above reaction aid is more preferably 8 parts by weight or less.

The above resin composition may comprise the previously described various additives. Thus, various properties can be imparted to the obtained resin composite material.

Examples of the method for providing the above resin composition comprising the above reaction aid and/or the above additives include mixing methods such as the method comprising melting and kneading and the method comprising dissolving or dispersing in a solvent as previously described. The above reaction aid and/or the above additives may be added when the above carbon material and the above synthetic resin are mixed, or may be added at another time.

Next, a grafting step is carried out simultaneously with the step of providing the above resin composition, or after the step of providing the above resin composition. The carbon material having a graphene structure has the property of easily adsorbing free radicals. Therefore, in a case where the above radical initiator in which a radical generated by thermal decomposition is a carbon radical is used, when a carbon radical is generated, a radical is generated in the synthetic resin by the carbon radical, and the radical is adsorbed on the carbon material. Therefore, in the resin composite

material, the synthetic resin is grafted on the carbon material surface.

In the above grafting step, heating to a temperature at which the above-described initiator thermally decomposes or higher is necessary. Thus, the initiator thermally decomposes, and, for example, when the above radical initiator in which a radical generated by thermal decomposition is a carbon radical is used, a carbon radical is generated, and the above grafting proceeds.

The above heating method is not particularly limited. It is desired to mix the above resin composition during heating.

In the method for producing a resin composite material according to the present invention, the object of the present invention can be achieved also when the dispersion area ratio of the carbon material when the above radical initiator is mixed is equal to or less than [Armax] represented by the following formula. The above radical initiator is preferably an initiator in which a radical generated when the above radical initiator thermally decomposes is a carbon radical.

$$[Armax] = (5[Gr])/8$$

wherein [Gr] is the ratio of the above carbon material based on 100 parts by weight of the above synthetic resin.

In a case where the dispersion area ratio of the carbon material is [Armax] or less, that is, in a case where the dispersibility of the carbon material is high, the contact probability of the radical initiator with the carbon material is increased, when the radical initiator is mixed. Therefore, the generation of a low molecular weight component due to the cutting of the molecular chain, and the like can be much more suppressed. In other words, resin deterioration can be much more suppressed.

By the step of grafting the above synthetic resin on the above carbon material, the above resin composition comprising the above carbon material on which the above synthetic resin is grafted, and the above synthetic resin that is not grafted on the above carbon material and is unreacted can be obtained. The above resin composition obtained in this manner can be a resin composite material comprising the above unreacted synthetic resin as a matrix resin obtained by the production method of the present invention.

The ratio of grafting, that is, the grafting ratio, can be measured by a method described in the section Evaluation of Examples and Comparative Examples described later. In this case, in the Examples described later, when a polypropylene-based resin is used as a synthetic resin, hot xylene at 130°C is used as a solvent for dissolving the ungrafted synthetic resin part. However, the solvent used for the dissolution and removal of the ungrafted synthetic resin may be appropriately selected according to the synthetic resin used. For example, when the synthetic resin is a polymethyl methacrylate-based resin, dichlorobenzene may be used. In the case of a polyamide-based resin, hot nitrobenzene at 200°C may be used. In the case of a polystyrene-based resin, dichlorobenzene may be used. In the case of a polycarbonate-based resin, THF may be used.

Further, in the method for producing a resin composite material according to the present invention, by separating, from the above resin composition comprising the above carbon material on which the above synthetic resin is grafted, the above grafted carbon material after the above grafting step, and then mixing the separated grafted carbon material and a new synthetic resin, a new resin composite material comprising the above new synthetic resin as a matrix resin can also be obtained. By using the above new synthetic resin as a matrix resin instead of the above synthetic resin used in the above grafting step, a resin composite material having various properties can be easily produced.

[Examples and Comparative Examples]

The present invention will be clarified below by giving specific Examples and Comparative Examples of the present invention. The present invention is not limited to the following Examples.

(Example 1)

100 Parts by weight of a polypropylene-based resin (hPP, manufactured by Sigma-Aldrich, trade name: polypropylene, weight-average molecular weight Mw1 = 250000, tensile modulus at 23°C: 1.2 GPa, MFR: 10 g/min) and 40 parts by weight of exfoliated graphite (manufactured by xGScience, trade name "xGnP-5", the maximum dimension in the surface direction of a layer surface observed using an SEM before use: about 5.0 μm, layer thickness: about 60 nm, the number of stacked layers of graphene: about 180, BET specific surface area: 75 $m^2/g$) were fed to an extruder and melted and kneaded. When the dispersion area ratio of the exfoliated graphite was 23%, 0.45 parts by weight of azobisisobutyronitrile (AIBN, manufactured by Wako Pure Chemical Industries, Ltd., 10-hour half-life temperature 65°C) as a radical initiator was fed to the extruder to provide a polyolefin-based resin composition.

The dispersion area ratio of the exfoliated graphite at the time of mixing the radical initiator was obtained by removing the mixture of the exfoliated graphite and the resin at the time of mixing the radical initiator, molding the mixture into a plate shape, and then performing the SEM observation of a cross section. Specifically, the sample molded into a plate shape was cut in the thickness direction and observed at 1000x magnification using an SEM. In an SEM photograph of the cross section taken, the area of the exfoliated graphite was measured. Here, for the area of the exfoliated graphite, only the area of parts having a thickness of 1 $\mu$m or more was measured. Then, the area of the exfoliated graphite was divided by the area of the entire field of view of the SEM photograph to calculate the dispersion area ratio of the exfoliated graphite (%). In Example 1, the dispersion area ratio of the exfoliated graphite was 23%. On the other hand, separately calculated [Armax] is 25, and it is seen that in Example 1, the dispersion area ratio of the exfoliated graphite at the time of mixing the radical initiator is [Armax] or less.

Next, 300 parts by weight of the above polypropylene resin was added to 140 parts by weight of the above polyolefin resin composition obtained, and the mixture was melted and kneaded in an extruder, extruded from a T die attached to the extruder tip, and sheet-molded by a cooling roll to obtain a sheet comprising a polyolefin-based resin composite material having a smooth surface and a thickness of 0.5 mm.

(Example 2)

A polyolefin-based resin composition was obtained as in Example 1 except that 2.68 parts by weight of azobisisobutyronitrile (AIBN, manufactured by Wako Pure Chemical Industries, Ltd.) was used as a radical initiator, and the dispersion area ratio of the exfoliated graphite at the time of mixing the radical initiator was 24%. 300 Parts by weight of the above polypropylene resin was added to 140 parts by weight of this polyolefin resin composition, the mixture was melted and kneaded in an extruder, and a sheet was obtained as in Example 1.

(Example 3)

A polyolefin-based resin composition was provided as in Example 1 except that the blending ratio of the exfoliated graphite was 20 parts by weight, and the dispersion area ratio of the exfoliated graphite at the time of mixing the radical initiator was 11%. 100 Parts by weight of the above polypropylene resin was added to 120 parts by weight of this polyolefin resin composition, the mixture was melted and kneaded in an extruder, and a sheet was obtained as in Example 1.

(Example 4)

A polyolefin-based resin composition was provided as in Example 1 except that the dispersion area ratio of the exfoliated graphite at the time of mixing the radical initiator was 21%. 300 Parts by weight of the above polypropylene resin was added to 140 parts by weight of this polyolefin resin composition, the mixture was melted and kneaded in an extruder, and a sheet was obtained as in Example 1.

(Example 5)

A polyolefin-based resin composition was provided as in Example 1 except that the dispersion area ratio of the exfoliated graphite at the time of mixing the radical initiator was 18%. 300 Parts by weight of the above polypropylene resin was added to 140 parts by weight of this polyolefin resin composition, the mixture was melted and kneaded in an extruder, and a sheet was obtained as in Example 1.

(Example 6)

A polyolefin-based resin composition was obtained as in Example 1 except that 100 parts by weight of block PP (bPP, manufactured by Prime Polypro, trade name "E-150GK", weight-average molecular weight Mw1 = 550000, tensile modulus at 23°C: 1.2 GPa, MFR: 0.6 g/10 min) was used as a polypropylene-based resin. 300 Parts by weight of the above block PP was added to this polyolefin resin composition, the mixture was melted and kneaded in an extruder, and a sheet was obtained as in Example 1.

(Example 7)

A radical-degradable resin composition was obtained as in Example 1 except that 100 parts by weight of polymethyl methacrylate (PMMA, manufactured by Sumitomo Chemical Co., Ltd., trade name: "SUMIPEX EX", weight-average molecular weight Mw1 = 91000, tensile modulus at 23°C: 3.1 GPa, MFR: 1.5 g/10 min) was used instead of the polypropylene-based resin. 300 Parts by weight of the above polymethyl methacrylate was added to this radical-degradable resin composition, the mixture was melted and kneaded in an extruder, and a sheet was obtained as in Example 1.

(Example 8)

A radical-degradable resin composition was obtained as in Example 7 except that the blending ratio of the exfoliated graphite was 20 parts by weight, and the dispersion area ratio of the exfoliated graphite at the time of mixing the radical initiator was 11%. 100 Parts by weight of the above polymethyl methacrylate resin was added to 120 parts by weight of this radical-degradable resin composition, the mixture was melted and kneaded in an extruder, and a sheet was obtained as in Example 1.

(Example 9)

100 Parts by weight of the polypropylene-based resin and 40 parts by weight of the exfoliated graphite used in Example 1, and 0.81 parts by weight of butyl 3-(2-furanyl)propenoic acid (manufactured by TOKYO CHEMICAL INDUSTRY CO., LTD.) as a radical stabilizer were fed to an extruder and melted and kneaded. When the dispersion area ratio of the exfoliated graphite was 23%, 0.84 parts by weight of 2,5-dimethyl-2,5-bis(t-butylperoxy)hexane (manufactured by NOF CORPORATION, trade name "PERHEXA 25B", 1-minute half-life temperature: 180°C), a radical initiator, was fed to provide a polyolefin-based resin composition. 300 Parts by weight of the above polypropylene resin was added to 140 parts by weight of this polyolefin resin composition, the mixture was melted and kneaded in an extruder, and a sheet was obtained as in Example 1.

(Example 10)

A polypropylene resin composition was obtained as in Example 1 except that 4.86 parts by weight of N,N dimethyllene p-phenylenebismaleimide (manufactured by TOKYO CHEMICAL INDUSTRY CO., LTD.) was fed as a radical stabilizer, 0.40 parts by weight of 2,5-dimethyl-2,5-bis(t-butylperoxy)hexane was fed as a radical initiator, and the dispersion area ratio of the exfoliated graphite at the time of mixing the radical initiator was 24%. 300 Parts by weight of the above polypropylene resin was added to 140 parts by weight of this resin composition, the mixture was melted and kneaded in an extruder, and a sheet was obtained as in Example 1.

(Comparative Example 1)

A polyolefin-based resin composition was provided as in Example 1 except that 0.66 parts by weight of benzoyl peroxide (manufactured by Sigma-Aldrich, 10-hour half-life temperature 73.6°C) was used as a radical initiator. 300 Parts by weight of the above polypropylene resin was added to 140 parts by weight of this polyolefin resin composition, the mixture was melted and kneaded in an extruder, and a sheet was obtained as in Example 1.

(Comparative Example 2)

A polyolefin-based resin composition was provided as in Example 2 except that 3.99 parts by weight of benzoyl peroxide was used as a radical initiator. 300 Parts by weight of the above polypropylene resin was added to 140 parts by weight of this polyolefin resin composition, the mixture was melted and kneaded in an extruder, and a sheet was obtained as in Example 1.

(Comparative Example 3)

A polyolefin-based resin composition was provided as in Example 3 except that 0.66 parts by weight of benzoyl peroxide was used as a radical initiator. 100 Parts by weight of the above polypropylene resin was added to 120 parts by weight of this polyolefin resin composition, the mixture was melted and kneaded in an extruder, and a sheet was obtained as in Example 1.

(Comparative Example 4)

A polyolefin-based resin composition was provided as in Comparative Example 1 except that the dispersion area ratio of the exfoliated graphite at the time of mixing the radical initiator was 27%. 300 Parts by weight of the above polypropylene resin was added to 140 parts by weight of this polyolefin resin composition, the mixture was melted and kneaded in an extruder, and a sheet was obtained as in Example 1.

(Comparative Example 5)

A polyolefin-based resin composition was provided as in Comparative Example 1 except that the dispersion area ratio of the exfoliated graphite at the time of mixing the radical initiator was 30%. 300 Parts by weight of the above polypropylene resin was added to 140 parts by weight of this polyolefin resin composition, the mixture was melted and kneaded in an extruder, and a sheet was obtained as in Example 1.

(Comparative Example 6)

A resin composite sheet was obtained as in Example 6 except that 0.66 parts by weight of benzoyl peroxide was fed as a radical initiator, and the dispersion area ratio of the exfoliated graphite at the time of charging the radical initiator was 23%.

(Comparative Example 7)

A resin composite sheet was obtained as in Example 7 except that 0.66 parts by weight of benzoyl peroxide was fed for a radical initiator.

(Comparative Example 8)

A resin composite sheet was obtained as in Example 8 except that 0.66 parts by weight of benzoyl peroxide was fed for a radical initiator.

(Comparative Example 9)

A resin composite sheet was obtained as in Example 9 except that a radical stabilizer was not fed.

(Comparative Example 10)

A resin composite sheet was obtained as in Example 10 except that a radical stabilizer was not fed.

(Evaluation of Examples and Comparative Examples)

For the sheets obtained in the Examples and the Comparative Examples, the grafting ratio, weight-average molecular weight, weight-average molecular weight ratio (Mw2/Mw1), tensile modulus, and MFR were evaluated by the following procedures.

(1) Measurement of Grafting Ratio

Each of the resin composite material sheets obtained by the Examples and the Comparative Examples was cut small to provide a resin composite material piece. Next, the above resin composite material piece was wrapped in filter paper. The ends of the above filter paper were folded so that the above resin composite material piece did not leak out of the above filter paper, and further, its periphery was sealed with metal clips. The package obtained in this manner was immersed in an excessive amount of a solvent for 60 hours. Thus, the ungrafted synthetic resin contained in the resin composite material sheet was dissolved and removed.

As the above solvent, hot xylene at 130°C was used when the synthetic resin used was a polypropylene-based resin, a high density polyethylene-based resin, a silane-modified polypropylene-based resin, or an atactic polypropylene-based resin.

Then, the above package was removed from the solvent and vacuum-dried to isolate the above grafted exfoliated graphite.

The grafted exfoliated graphite isolated in this manner was subjected to thermogravimetric measurement (TGA measurement) under an air atmosphere in the temperature range of 30 to 600°C at a temperature increase rate of 10°C/min. At this time, the grafting ratio was obtained for the above grafted exfoliated graphite by the following formula with the amount of the decomposition product decomposed before temperature increase to 500°C being A% by weight, and the amount of the undecomposed residue not decomposed even by temperature increase to 500°C being B% by weight. The results are shown in the following Table 1.

$$\text{grafting ratio (\% by weight)} = (A/B) \times 100$$

(2) Measurement of weight-average molecular weight Mw2: A high temperature GPC was used to measure the weight-average molecular weight Mw2 of the ungrafted synthetic resin contained in the resin composite material sheet dissolved and removed by hot xylene in the above grafting ratio measurement.

(3) Calculation of weight-average molecular weight ratio (Mw2/Mw1): The ratio between the weight-average molecular weight Mw2 obtained in (2) and the weight-average molecular weight Mw1 of each of the original synthetic resins provided in the Examples and the Comparative Examples was obtained.

(4) Tensile modulus: The tensile modulus at 23°C of each of the sheets comprising resin composite materials obtained in the Examples and the Comparative Examples was measured according to JIS K6767.

(5) Measurement of MFR of Ungrafted Synthetic Resin The synthetic resin not grafted on the exfoliated graphite dissolved and removed by the solvent in measuring the above grafting ratio was extracted by vacuum drying. Then, the MFR of the extracted resin was measured according to JIS K7210.

The above evaluation results are shown in the following Table 1 and Table 2.

[Table 1]

| | | | Ex. 1 | Ex. 2 | Ex. 3 | Ex. 4 | Ex. 5 | Ex.6 | Ex. 7 | Ex. 8 | Comp. Ex.1 | Comp. Ex. 2 | Comp.' Ex.3 | Comp. Ex.4 | Comp. Ex. 5 | Comp. Ex. 6 | Comp.' Ex.7 | Comp. Ex. 8 |
|---|---|---|---|---|---|---|---|---|---|---|---|---|---|---|---|---|---|---|
| Materials | Grafted resin | hPP | 100 | 100 | 100 | 100 | 100 | | | | 100 | 100 | 100 | 100 | 100 | | | |
| | | bPP | | | | | | 100 | | | | | | | | 100 | | |
| | | PMMA | | | | | | | 100 | 100 | | | | | | | 100 | 100 |
| | Carbon material | Exfoliated graphite | 40 | 40 | 20 | 40 | 40 | 40 | 40 | 20 | 40 | 40 | 20 | 40 | 40 | 40 | 40 | 20 |
| | Radical initiator | AIBN | 0.45 | 2.68 | 0.45 | 0.45 | 0.45 | 0.45 | 0.45 | 0.45 | | | | | | | | |
| | | Benzoyl peroxide | | | | | | | | | 0.66 | 3.99 | 0.66 | 0.66 | 0.66 | 0.66 | 0.66 | 0.66 |
| | Diluent resin | hPP | 300 | 300 | 100 | 300 | 300 | | | | 300 | 300 | 100 | 300 | 300 | | | |
| | | bPP | | | | | | 300 | | | | | | | | 300 | | |
| | | PMMA | | | | | | | 300 | 100 | | | | | | | 300 | 100 |
| Kneading conditions | Dispersion area ratio at the time of charging radical initiator (%) | | 23 | 24 | 11 | 21 | 18 | 23 | 23 | 11 | 23 | 24 | 11 | 27 | 30 | 23 | 23 | 11 |
| | [Armax] = (5[Gr]) /8 | | 25 | 25 | 12.5 | 25 | 25 | 25 | 25 | 12.5 | 25 | 25 | 12.5 | 25 | 25 | 25 | 25 | 12.5 |
| Evaluation | Grafting ratio (% by weight) | | 14 | 20 | 6 | 21 | 23 | 18 | 16 | 8 | 15 | 19 | 7 | 14 | 13 | 15 | 15 | 8 |
| | MFR of matrix resin (g/10min) | | 11 | 14 | 14 | 10 | 10 | 6 | 8 | 10 | 20 | 26 | 26 | 26 | 28 | 19 | 25 | 28 |
| | Mw2/Mw1 | | 0.80 | 0.60 | 0.68 | 0.83 | 0.85 | 0.83 | 0.70 | 0.60 | 0.40 | 0.24 | 0.32 | 0.24 | 0.20 | 0.40 | 0.37 | 0.28 |
| | Tensile modulus (GPa) | | 3.1 | 2.7 | 2.9 | 3.2 | 3.3 | 2.1 | 4.4 | 4.2 | 2.7 | 2.5 | 2.6 | 2.4 | 2.3 | 1.8 | 3.8 | 3.6 |

[Table 2]

| | | | Ex. 9 | Ex. 10 | Comp. Ex. 9 | Comp. Ex. 10 |
|---|---|---|---|---|---|---|
| Materials | Grafted resin | PP | 100 | 100 | 100 | 100 |
| | Carbon material | Exfoliated graphite | 40 | 40 | 40 | 40 |
| | Radical initiator | 2,5-Dimethyl-2,5-bis(t-butylperoxy)hexane | 0.84 | 0.40 | 0.84 | 0.40 |
| | Radical stabilizer | Butyl 3-(2-furanyl)propenoic acid | 0.81 | | | |
| | | N,N Dimethyllene p-phenylenebismaleimide | | 4.86 | | |
| | Diluent resin | PP | 300 | 300 | 300 | 300 |
| Kneading conditions | Dispersion area ratio at the time of charging radical initiator (%) | | 23 | 24 | 23 | 24 |
| | [Armax] = (5[Gr]) /8 | | 25 | 25 | 25 | 25 |
| Evaluation | Grafting ratio (% by weight) | | 15 | 13 | 14 | 12 |
| | MFR of matrix resin (g/10min) | | 3 | 14 | 38 | 39 |
| | Mw2/Mw1 | | 0.80 | 0.60 | 0.20 | 0.30 |
| | Tensile modulus (GPa) | | 3.2 | 2.9 | 2.8 | 2.4 |

It is seen that in Examples 1 to 10, MFR is 15 g/10 min or less and smaller than that in Comparative Examples 1 to 10. In other words, it is seen that the cutting of the molecular chain of the synthetic resin does not proceed much in the obtained resin composite material.

Similarly, the weight-average molecular weight ratio Mw2/Mw1 was also less than 0.5 and low in Comparative Examples 1 to 10. On the other hand, it is seen that in Examples 1 to 10, the weight-average molecular weight ratio Mw2/Mw1 is sufficiently higher than that in Comparative Examples 1 to 10, and the deterioration of the resin does not proceed.

Therefore, the tensile modulus is also effectively increased in Examples 1 to 10.

## Claims

1. A resin composite material comprising a synthetic resin and a carbon material having a graphene structure having a part of the synthetic resin grafted thereon and being dispersed in the synthetic resin,
   a part of the synthetic resin being not grafted on the carbon material having a graphene structure and said part of the synthetic resin not grafted on the carbon material having an MFR of 15 g/10 min or less as measured according to JIS K7210.

2. The resin composite material according to claim 1 comprising 5 parts by weight or more of the carbon material having a graphene structure based on 100 parts by weight of the synthetic resin.

3. The resin composite material according to claim 1 or 2 further comprising a different type of resin from the synthetic resin.

4. The resin composite material according to any one of claims 1 to 3, wherein the carbon material having a graphene structure is at least one selected from the group consisting of graphite, exfoliated graphite, and graphene.

5. The resin composite material according to any one of claims 1 to 4, wherein the synthetic resin is a thermoplastic resin.

6. The resin composite material according to claim 5, wherein the thermoplastic resin is a radical-degradable resin.

**7.** A method for producing a resin composite material, comprising steps of:

providing a resin composition comprising a synthetic resin and a carbon material dispersed in the synthetic resin and having a graphene structure; and
grafting the synthetic resin on the carbon material simultaneously with the step of providing the resin composition, or after the step of providing the resin composition,
the grafting step being performed by mixing an initiator in which a radical generated in thermal decomposition is a carbon radical with the synthetic resin and the carbon material, and heating an obtained mixture.

**8.** A method for producing a resin composite material, comprising steps of:

providing a resin composition comprising a synthetic resin and a carbon material dispersed in the synthetic resin and having a graphene structure; and
grafting the synthetic resin on the carbon material simultaneously with the step of providing the resin composition, or after the step of providing the resin composition, and
the grafting step being performed by mixing a radical initiator with the synthetic resin and the carbon material, and heating an obtained mixture, and
a dispersion area ratio of the carbon material when the radical initiator is mixed being equal to or less than [Armax] represented by the following formula:

$$[Armax] = (5[Gr])/8$$

wherein [Gr] is a ratio of the carbon material based on 100 parts by weight of the synthetic resin.

**9.** The method for producing a resin composite material according to claim 8, wherein a radical generated when the radical initiator thermally decomposes is a carbon radical.

**10.** A method for producing a resin composite material, comprising steps of:

providing a resin composition comprising a synthetic resin and a carbon material dispersed in the synthetic resin and having a graphene structure; and
grafting the synthetic resin on the carbon material simultaneously with the step of providing the resin composition, or after the step of providing the resin composition, and
the grafting step being performed by mixing a radical initiator and a compound having radical trapping properties with the synthetic resin and the carbon material, and heating an obtained mixture.

**11.** The method for producing a resin composite material according to claim 10, wherein the compound having radical trapping properties is at least one selected from the group consisting of compounds having any one of structures of the following formulas (1) to (5):
[Formula 1]

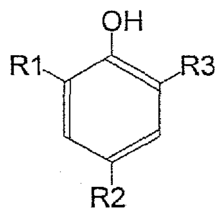

··· Formula (1)

[Formula 2]

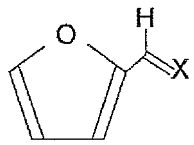

··· Formula (2)

[Formula 3]

(RO)2PH(=O) Formula (3)

[Formula 4]

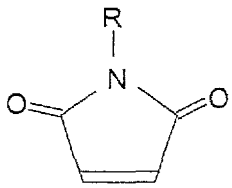

··· Formula (4)

[Formula 5]

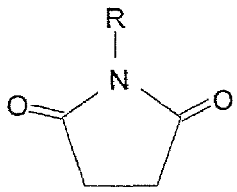

··· Formula (5)

**12.** The method for producing a resin composite material according to any one of claims 7 to 11, wherein the synthetic resin is grafted on the carbon material so that Mw2/Mw1 that is a ratio between a weight-average molecular weight of the synthetic resin, Mw1, and a weight-average molecular weight of the synthetic resin not grafted on the carbon material in an obtained resin composite material, Mw2, is 0.5 or more.

**13.** The method for producing a resin composite material according to any one of claims 7 to 12, wherein the resin composition comprises 5 parts by weight or more of the carbon material having a graphene structure based on 100 parts by weight of the synthetic resin.

**14.** The method for producing a resin composite material according to any one of claims 7 to 13, wherein the resin composition further comprises a different type of resin from the synthetic resin.

**15.** The method for producing a resin composite material according to any one of claims 7 to 14, wherein the carbon material having a graphene structure is at least one selected from the group consisting of graphite, exfoliated graphite, and graphene.

**16.** The method for producing a resin composite material according to any one of claims 7 to 15, wherein the synthetic resin is a thermoplastic resin.

## INTERNATIONAL SEARCH REPORT

International application No.
PCT/JP2014/054814

A. CLASSIFICATION OF SUBJECT MATTER
*C08J3/20*(2006.01)i, *C08K3/04*(2006.01)i, *C08L101/00*(2006.01)i

According to International Patent Classification (IPC) or to both national classification and IPC

B. FIELDS SEARCHED

Minimum documentation searched (classification system followed by classification symbols)
C08J3/00-3/28, 99/00, C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2012/029946 A1 (Sekisui Chemical Co., Ltd.), 08 March 2012 (08.03.2012), claims 1 to 4, 7, 9; paragraphs [0024], [0031], [0038], [0055], [0067] to [0071]<br>& JP 2012-136712 A & JP 5007371 B<br>& US 2013/0210955 A1 & EP 2612889 A1<br>& CN 103080235 A | 1-6,8,12-16<br>1-6<br>7,9-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 April, 2014 (17.04.14) | 28 April, 2014 (28.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2014/054814

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-517121 A (Dow Global Technologies Inc.), 28 June 2007 (28.06.2007), paragraph [0005] & JP 4886523 B & US 2005/0197457 A1 & EP 1699878 A & WO 2005/066282 A2 & WO 2005/063895 A2 & DE 602004016886 D & CA 2550763 A & KR 10-2006-0120223 A & CN 1898335 A & BRA PI0417756 & AT 409729 T & ES 2339358 T | 1-6 |
| A | WO 2012/105344 A1 (Sekisui Chemical Co., Ltd.), 09 August 2012 (09.08.2012), claim 1; paragraphs [0020], [0028] to [0036] & JP 5082020 B | 1-16 |
| A | JP 56-112995 A (Nippon Graphite Industries, Ltd.), 05 September 1981 (05.09.1981), entire text (Family: none) | 1-16 |
| A | JP 58-142942 A (Central Glass Co., Ltd.), 25 August 1983 (25.08.1983), entire text & US 4508761 A & GB 2109781 A & DE 3239213 A & FR 2515190 A & IT 1153280 B | 1-16 |
| A | JP 61-218648 A (Nippon Steel Chemical Co., Ltd.), 29 September 1986 (29.09.1986), entire text (Family: none) | 1-16 |
| A | JP 9-111068 A (Littelfuse, Inc.), 28 April 1997 (28.04.1997), entire text & US 6059997 A & US 5864280 A & US 5880668 A & EP 852801 A & WO 1997/012378 A1 & DE 69606316 T & AU 7371196 A & AT 189078 T & CA 2233314 A & BR 9610686 A & TW 405125 B & CN 1202264 A & MX 9802374 A | 1-16 |
| A | JP 2012-62453 A (Sekisui Chemical Co., Ltd.), 29 March 2012 (29.03.2012), entire text (Family: none) | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5007371 B
- JP 2012136712 A